# EUROPÄISCHE PATENTANMELDUNG

(11) **EP 1 690 971 A2**
(43) Veröffentlichungstag der Anmeldung: **16.08.2006**
(21) Anmeldenummer: 06002612.7
(22) Anmeldetag: 09.02.2006
(51) Int. Cl.: D06F 39/00, D06F 39/04, A47L 15/42

(54) **Heizeinrichtung für ein Elektrogerät**

(30) Priorität: 15.02.2005 DE 102005007935
(71) Anmelder: E.G.O. ELEKTRO-GERÄTEBAU GmbH, D-75038 Oberderdingen (DE)
(72) Erfinder: Münzner, Rainer, 08340 Schwarzenberg (DE); Schümann, Daniel, 01328 Dresden (DE)
(74) Vertreter: Patentanwälte Ruff, Wilhelm, Beier, Dauster & Partner

(57) **Zusammenfassung**

Die Erfindung beschreibt in einem Ausführungsbeispiel eine Heizeinrichtung (12) für eine Waschmaschine oder eine Spülmaschine. In der Maschine ist die Heizeinrichtung (12) in einer Wasserführung vorgesehen, wobei sie wenigstens ein Heizelement (16) aufweist und mittels einer Halterung (18) in einer Öffnung der Wandung der Wasserführung gelagert ist. An der Halterung (18) ist auch eine Leitfähigkeitsmessvorrichtung (14) angeordnet, die in die Wasserführung ragt. Heizeinrichtung (12) und Leitfähigkeitsmessvorrichtung (14) bilden eine Baueinheit.

## Beschreibung

Die Erfindung betrifft eine Heizeinrichtung für ein wasserführendes und/oder mit verschmutztem Wasser arbeitendes Elektrogerät mit einer Wasserführung, insbesondere für ein Elektrohausgerät wie beispielsweise eine Waschmaschine oder eine Spülmaschine. Die Heizeinrichtung weist wenigstens ein Heizelement auf, das an oder in einer Wasserführung angeordnet ist.

Eine derartige Vorrichtung ist beispielsweise aus der europäischen Patentschrift EP 0 421 442 B1 bekannt. Darin ist eine Trommelwaschmaschine beschrieben, die eine Heizvorrichtung aufweist, die durch die Wandung im unteren Bereich einer äußeren Wanne geführt ist. Die Durchtrittstelle der Heizvorrichtung in der Wandung ist mittels einer Halterung der Heizvorrichtung abgedichtet.

Weiterhin ist beispielsweise aus der europäischen Patentanmeldung EP 0 633 342 A1 ein Verfahren und eine Vorrichtung zur Optimierung des Waschmitteleinsatzes bekannt. Eine Vorrichtung zur Bestimmung der Leitfähigkeit wird dazu in die Wasserzuführung einer Waschmaschine oder Spülmaschine eingebracht und die Leitfähigkeit des Wassers bestimmt. Die Leitfähigkeit des Wassers verändert sich in Abhängigkeit der im Wasser gelösten Ionen beziehungsweise des Verkalkungsgrads. Die Leitfähigkeit der Reinigungslauge kann mit einem derartigen Verfahren beziehungsweise einer derartigen Vorrichtung jedoch nicht bestimmt werden.

### Aufgabe und Lösung

Aufgabe der Erfindung ist es daher, eine Heizeinrichtung zu schaffen, mit der der Reinigungsmittelbedarf in einem automatisierten Reinigungsvorgang weiter optimiert werden kann durch Verbesserungen an der Messung, insbesondere soll eine bessere Anpassung an den Reinigungsvorgang erfolgen, Wasser und Zeit gespart werden sowie beispielsweise Wäsche schonender gewaschen werden. Gleichzeitig soll mit der Erfindung eine Verringerung der Arbeitsschritte bei der Montage der Mess-Systeme erreicht werden.

Gelöst wird diese Aufgabe durch eine Heizeinrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist die Wandung der Wasserführung eine Öffnung auf, an der eine Leitfähigkeitsmessvorrichtung derart im Bereich der Heizeinrichtung angeordnet ist, dass sie in die Wasserführung hineinragt.

Dabei kann sie vorteilhaft gemäß einer Ausbildung der Erfindung an der Halterung der Heizeinrichtung eine Leitfähigkeitsmessvorrichtung angeordnet sein, die in die Wasserführung ragt. Die Kombination der Heizeinrichtung mit einer Leitfähigkeitseinrichtung bietet mehrere Vorteile. Zum einen sind mehrere funktionell wichtige Teile eines Elektrogeräts in einer Baueinheit vereint, so dass in einem Montageablauf des Elektrogerätes, beispielsweise an einem Fließband, weniger Arbeitsschritte und Arbeitsstationen vorgesehen werden müssen. Zum anderen ist es beispielsweise durch die erfindungsgemäße Vorrichtung möglich, ein bestehendes Elektrogerät mit einer Leitfähigkeitsmessvorrichtung nachzurüsten, ohne dass Eingriffe in eine Wandung einer Wasserführung vorgenommen werden müssen.

In Ausgestaltung der Erfindung ist an der Halterung eine Ausnehmung für die Aufnahme der Leitfähigkeitsmessvorrichtung vorgesehen. Darin kann die Leitfähigkeitsmessvorrichtung eingesteckt werden, was einen Durchgang sowie eine Befestigung ermöglicht.

In einer anderen Ausbildung der Erfindung ist das Heizelement an der Außenseite der Wandung flächig angeordnet, wobei es einen wesentlichen Teil der Außenfläche bedecken kann. Beispielsweise ist die Wasserführung rohrartig ausgebildet, insbesondere ein sogenanntes Heizrohr. Das Heizelement ist dann ein auf die Wasserführung aufgewickelter Heizleiter, beispielsweise spiralartig, insbesondere ein flacher Heizdraht. Das Heizelement kann aber auch in einem Dickschichtverfahren in Form von Heizschleifen hergestellt bzw. aufgebracht sein, beispielsweise durch Siebdruckverfahren odgl..

Die Leitfähigkeitsmessvorrichtung kann als einziges Teil in die Wasserführung hineinragen. Dies kann nur ein Stück oder auch relativ weit sein. Dabei füllt sie vorteilhaft die Öffnung in der Wandung der Wasserführung vollständig aus bzw. verschließt sie, insbesondere mit einem Schaft oder Sockel.

In weiterer Ausgestaltung der Erfindung weist die Leitfähigkeitsmessvorrichtung wenigstens einen Anschluss, einen Schaft und einen Sensorbereich auf. Vorzugsweise sind am Sensorbereich wenigstens zwei Sensoren zur Bestimmung der Leitfähigkeit vorgesehen. Dabei ist der Schaft länglich bzw. zylinderartig ausgebildet und weist an einem Ende den Sensorbereich auf. Am gegenüberliegenden Ende des Schafts ist der Anschluss vorgesehen, der beispielsweise mit Steckverbindern, Schraubkontakten oder mit jeder anderen beliebigen elektrischen Kontaktierungsmöglichkeit ausgebildet sein kann.

Die Leitfähigkeitsmessvorrichtung wird, ausgehend von einem außerhalb der Wandung angeordneten Bereich der Halterung, derart in die Ausnehmung der Halterung eingeführt, dass der Anschlussbereich vom Halter absteht und sich außerhalb wasserführender Teile befindet. Der Sensorbereich ragt auf der gegenüberliegenden Seite des Halters so aus ihm heraus, dass die Sensoren vollständig frei liegen.

In einer Ausgestaltung der Erfindung sind die Sensoren als Elektroden ausgebildet, mittels derer der elektrische Widerstand bzw. die Leitfähigkeit des Wassers bestimmbar ist. Die Bestimmung des elektrischen Widerstandes eines Gegenstands stellt eine vorteilhafte Möglichkeit dar, seine Leitfähigkeit zu bestimmen. Die Leitfähigkeit kann direkt oder indirekt gemessen werden, wobei eine direkte Messung die vorteilhaftere Methode ist. Dabei können Messwerte direkt verwendet werden.

In einer Ausgestaltung der Erfindung sind die Elektroden als Kondensatorplatten ausgebildet zur Bestimmung der Permittivität bzw. der Dielektrizität des Wassers. Aus der Permittivität lässt sich mittels einfacher Rechenoperationen die Leitfähigkeit des Wassers ermitteln. Vorteilhaft ist hierbei nur ein elektrisches Feld in das Wasser einzubringen, so dass keine Ströme beispielsweise über das Gehäuse abfließen können.

In einer Ausgestaltung der Erfindung sind die Sensoren als Spulen ausgebildet, mittels derer die Permeabilität des Wassers bestimmbar ist. Aus der Permeabilität lässt sich mittels einfacher Rechenoperationen die Leitfähigkeit des Wassers ermitteln. Bei dieser Ausgestaltung wird vorteilhaft ebenfalls kein Strom in das Wasser eingeleitet.

In weiterer Ausgestaltung der Erfindung sind die Sensoren korrosionsbeständig ausgebildet, vorzugsweise zumindest mit einem korrosionsbeständigen Material überzogen. Diese Ausgestaltung der Sensoren ist besonders vorteilhaft, da dem Wasser Reinigungsmittel zugesetzt werden können, die mit vielen Materialien reagieren und diese umwandeln und so deren Eigenschaften unvorhersehbar verändern. Die Elektroden können beispielsweise aus nicht rostendem und chemikalienresistenten Stahl oder Edelstahl bestehen. Ist ein korrosionsbeständiger Überzug vorgesehen, so kann dieser beispielsweise aus Kunststoff bestehen.

Die Elektroden können auch aus Halbleitermaterial bestehen, welches eine Isolierung aus einem Oxid aufweist. Dadurch kann eine geringe Oberflächenrauigkeit erreicht werden, wodurch die Ablagerung von Schmutz und Verunreinigungen erschwert ist. Diese könnten nämlich eine Messung verfälschen. Als Elektrodenmaterial bietet sich beispielsweise Silizium an. Eine Isolation kann mit einer Tantalpentoxid-Schicht erfolgen, wobei die Schicht eine Dicke im nm-Bereich aufweisen kann.

Vorteilhaft ist der Sensorbereich länglich ausgebildet und steht von der Halterung im wesentlichen senkrecht ab. So kann eine besonders schmale und platzsparende Bauform der Vorrichtung erreicht werden. Dabei kann die Heizeinrichtung bzw. das Heizelement langgestreckt ausgebildet sein, wobei es vorzugsweise einen Zwischenraum oder freien Raum aufweist, in dem sich der Sensorbereich befindet. Dabei kann der Sensor innerhalb der Heizeinrichtung verlaufen bzw. diese ihn umgeben. Der Sensorbereich kann so vollständig in die Bauform der Heizeinrichtung bzw. des Heizelements integriert werden. Die Vorrichtung kann demnach ebenfalls an der Stelle des Elektrogerätes vorgesehen werden, an der das Heizelement vorgesehen ist, ohne dass weiterer Platz geschaffen werden muss. Auch elektrische Zuleitungen in Form eines Kabelbaums odgl. sind hier bereits vorhanden.

In einer Ausgestaltung der Erfindung weist die Leitfähigkeitsmessvorrichtung einen gewissen Abstand zum Heizelement auf. Dadurch kann die Leitfähigkeitsmessvorrichtung vollständig vom Wasser umspült werden, wodurch vorteilhaft Messfehler vermieden werden können. Auch überträgt sich die Wärmeenergie des Heizelements nicht direkt auf die Leitfähigkeitsmessvorrichtung, sondern erst auf das Wasser, da ja auch dieses erwärmt werden soll. Schäden an der Leitfähigkeitsmessvorrichtung, die durch hohe Temperaturen beispielsweise das Material der Messvorrichtung verspröden lassen könnten, werden so vermieden.

In einer Ausgestaltung der Erfindung sind Anschluss, Schaft und Sensorbereich aus einem korrosionsbeständigen Material gefertigt. Dieses Material ist vorzugsweise Kunststoff, der beispielsweise in einem Spritzgussverfahren um den Sensorbereich und dessen Anschlussvorrichtungen gespritzt wird. Vorteilhaft lassen sich mittels Spritzgussverfahren schnell und günstig große Stückzahlen erreichen.

In einer Ausgestaltung der Erfindung ist die Leitfähigkeitsmessvorrichtung einstückig gefertigt. Somit wird ein Modul bzw. eine Baueinheit geschaffen, das einfach und in einem Arbeitsgang in dem Halter der Heizeinrichtung befestigt werden kann.

In einer Ausgestaltung der Erfindung sind die Sensoren mittels elektrisch leitender Verbindungen, die durch den Schaft geführt sind, mit Steckverbindungsvorrichtungen am Anschluss verbunden. So sind keine weiteren Ausnehmungen im Halter vorzusehen, durch die die Anschlussvorrichtungen geführt werden können. Das Vorsehen der Anschlussvorrichtungen im Schaft erlaubt es weiterhin, die Leitfähigkeitsmessvorrichtung in dem Bereich, der in das Wasser ragt, vollständig umschlossen auszuführen. In weiterer Ausgestaltung der Erfindung ist die Ausnehmung in der Halterung korrespondierend mit der Leitfähigkeitsmessvorrichtung ausgebildet, vorzugsweise korrespondierend mit dem Schaft, so dass eine dichtende Wirkung erzielbar ist. In einer weiteren Ausgestaltung der Erfindung ist die Leitfähigkeitsmessvorrichtung in der Halterung abgedichtet angeordnet. Durch die beiden vorstehenden Ausgestaltungen ist im Bereich der Leitfähigkeitsmessvorrichtung keine weitere Abdichtvorrichtung mehr vorzusehen, wodurch die durch die Montage anfallenden Kosten weiter verringert werden.

In einer Ausgestaltung der Erfindung ist die Verbindung zwischen der Leitfähigkeitsmessvorrichtung und der Halterung verdrehsicher, wobei die Verdrehsicherung vorzugsweise derart gestaltet ist, dass die Sensoren der Leitfähigkeitsmessvorrichtung im montierten Zustand der Vorrichtung vertikal ausgerichtet sind. Vorteilhaft können sich so keine Ablagerungen auf den Sensoren ansammeln, die ein Messergebnis auf Dauer unvorhersehbar verfälschen würden.

In einer Ausgestaltung der Erfindung ist die Halterung in einer Ausnehmung in einer Wandung der Wasserführung abgedichtet angeordnet. Wasser aus dem Bereich, der von der Wandung umschlossen ist, kann so vorteilhaft dadurch nicht aus der Wasserführung austreten.

In einer Ausgestaltung der Erfindung ist eine Auswertevorrichtung zur Auswertung der Sensorsignale der Leitfähigkeitsmessvorrichtung vorgesehen. Vorzugsweise ist die Auswertevorrichtung zur Berichtigung eines ermittelten Leitfähigkeitswerts mittels eines Korrekturwertes ausgebildet, der durch die direkte Nachbarschaft zum Heizelement durch die lokal höhere Wassertemperatur verfälscht ist. Die Korrektur des Messwerts ist nötig, da Wasser mit einer hohen Temperatur einen höheren Leitwert aufweist als dasselbe Wasser mit einer niedrigeren Temperatur. Der Korrekturwert kann beispielsweise im Rahmen einer Versuchsreihe ermittelt werden.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihre Allgemeingültigkeit.

### Kurzbeschreibung der Zeichnungen

Ausführungsformen der Erfindung sind in den Zeichnungen schematisch dargestellt und werden im folgenden näher erläutert. In den Zeichnungen zeigt:
- Fig. 1: eine Darstellung der erfindungsgemäßen Vorrichtung mit einer Heizvorrichtung und einer Leitfähigkeitsmessvorrichtung,
- Fig. 2: eine vergrößerte Darstellung eines Teilschnitts durch die Leitfähigkeitsmessvorrichtung und
- Fig. 3: eine alternative Ausbildung eines Heizrohrs mit außen angebrachter Heizung und hineingesteckter Leitfähigkeitsmessvorrichtung.

### Detaillierte Beschreibung der Zeichnungen

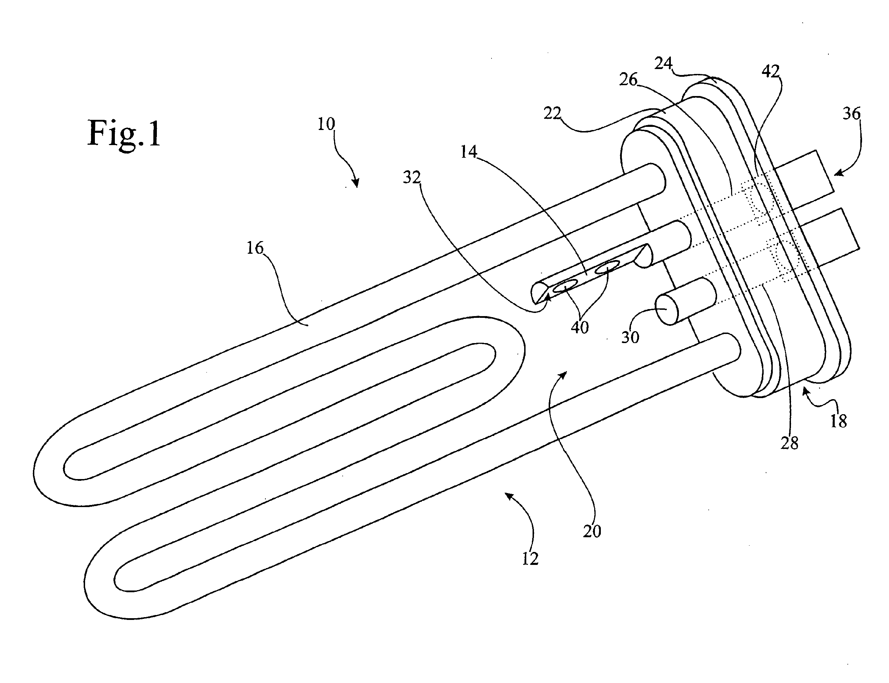

Fig. 1 zeigt eine erfindungsgemäße Vorrichtung 10 mit einem Heizelement 12 und einer Leitfähigkeitsmessvorrichtung 14. Das Heizelement 12 weist eine Heizschlange 16 auf, die möglichst vollständig in das zu beheizende Wasser ragt, und einen Halter 18, der etwa zur Hälfte in das zu Wasser ragt. Die längliche Heizschlange 16 verläuft mäanderartig und bildet einen Zwischenraum 20.

Am Halter 18 ist ein elastischer Bereich 22 ausgebildet, der sich im montierten Zustand der Vorrichtung in einer nicht dargestellten Wasserführung in einer Ausnehmung in der Wandung der Wasserführung befindet und abdichtet. Weiterhin ist an dem Halter 18 ein Flansch 24 ausgebildet, der im montieren Zustand an einer Außenfläche der wasserführenden Wandung anliegt und daran befestigt ist. Der Halter 18 ist mit gestrichelt dargestellten Ausnehmungen 26, 28 zur korrespondierenden und abdichtenden Aufnahme der Leitfähigkeitsmessvorrichtung 14 und beispielsweise einer Thermosicherung 30 odgl. versehen. Beide ragen in den Zwischenraum 20. Beliebige weitere Vorrichtungen können in diesen oder weiteren Ausnehmungen vorgesehen werden.

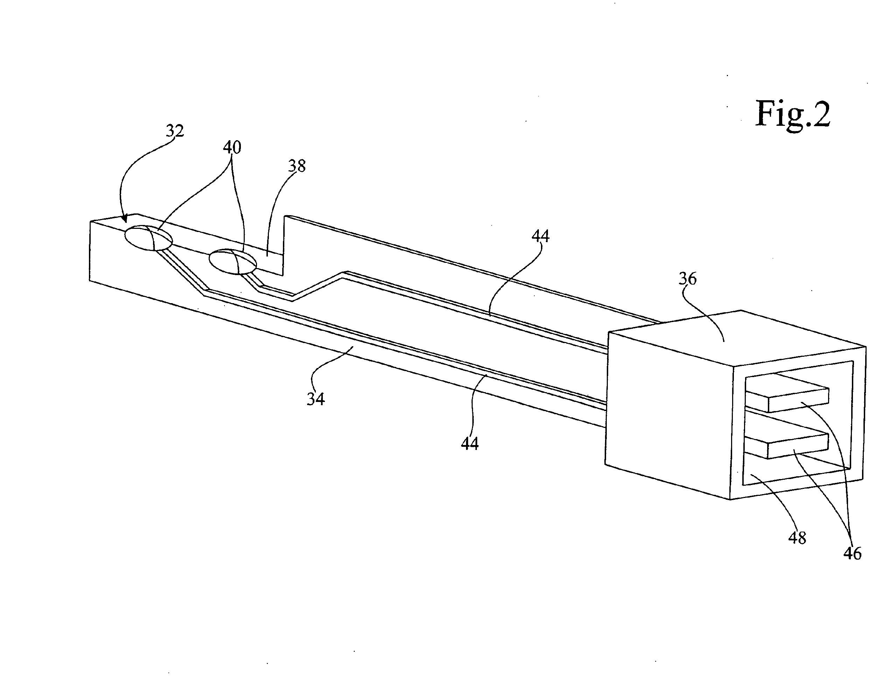

Die einstückig ausgebildete Leitfähigkeitsmessvorrichtung 14 weist, wie der Fig. 2 zu entnehmen ist, einen Sensorbereich 32, einen länglichen und im wesentlichen zylindrischen Schaft 34 und einen elektrischen Anschluss 36 auf. Der Sensorbereich 32 ist als Verlängerung des Schafts 34 ausgebildet, weist jedoch an dessen Oberseite einen abgeflachten Bereich 38 auf, an dem zwei flächig ausgebildete Elektroden 40 als Sensoren angeordnet und darin eingebettet sind. Die Elektroden 40 sind etwa parallel und etwa auf einer gemeinsamen Ebene, nämlich auf der abgeflachten Fläche 38, angeordnet. Die Form der Elektroden 40 kann jedoch, ebenso wie deren Anordnung, auch in jeder anderen vorstellbaren und dienlichen Art gewählt sein.

Am gegenüberliegenden Ende des Schafts 34 ist in dessen Verlängerung der Anschluss 36, der vorzugsweise quaderförmig und becherartig ist. Die Querschnittsfläche des Anschlusses 36 ist größer gewählt als die Querschnittsfläche des Schafts 34, wodurch der Anschluss 36 einen Flansch 42 zur Befestigung aufweist.

Von den Elektroden 40 ausgehend führt je eine Anschlussleitung 44 durch den Schaft 34 bis zum Anschluss 36. Die Anschlussleitungen 44 können beispielsweise als Draht oder Litze ausgebildet sein und weisen an ihren den Elektroden 40 abgewandten Enden Steckverbinder 46 auf, die in eine becherartige Ausnehmung 48 des Anschlusses 36 ragen. Die becherartige Ausnehmung 48 und die Steckverbinder 46 bilden eine Steckbuchse, mit der ein korrespondierender Stecker in Eingriff gebracht werden kann zum Anschluß.

Wie in Fig. 1 dargestellt, ist der Schaft 34 der Leitfähigkeitsmessvorrichtung 14 derart in die gestrichelt dargestellte Ausnehmung 26 eingebracht, dass der Sensorbereich 32 in den Zwischenraum 20 ragt und der Flansch 42 an der Außenseite des Flansches 24 anliegt. Dabei ist die Messvorrichtung 14 in der beschriebenen Ausführung derart angeordnet, dass der Bereich 32 senkrecht zu einer Ebene orientiert ist, die von der Heizschlange 16 definiert wird. Die Ausrichtung der Messvorrichtung 14 zu dieser Ebene hängt dabei im allgemeinen von der Anordnung des Heizelements 12 im Elektrogerät ab. Sie ist vorteilhaft immer so gewählt, dass der Bereich 32 vertikal ausgerichtet ist. Um ein ungewolltes Verdrehen der Messvorrichtung 14 zu vermeiden, kann in der Ausnehmung 26 eine Verdrehsicherung beispielsweise als Formschlusses vorgesehen sein, beispielsweise in Form eines Dorns, der in eine Nut im Schaft 34 eingreift.

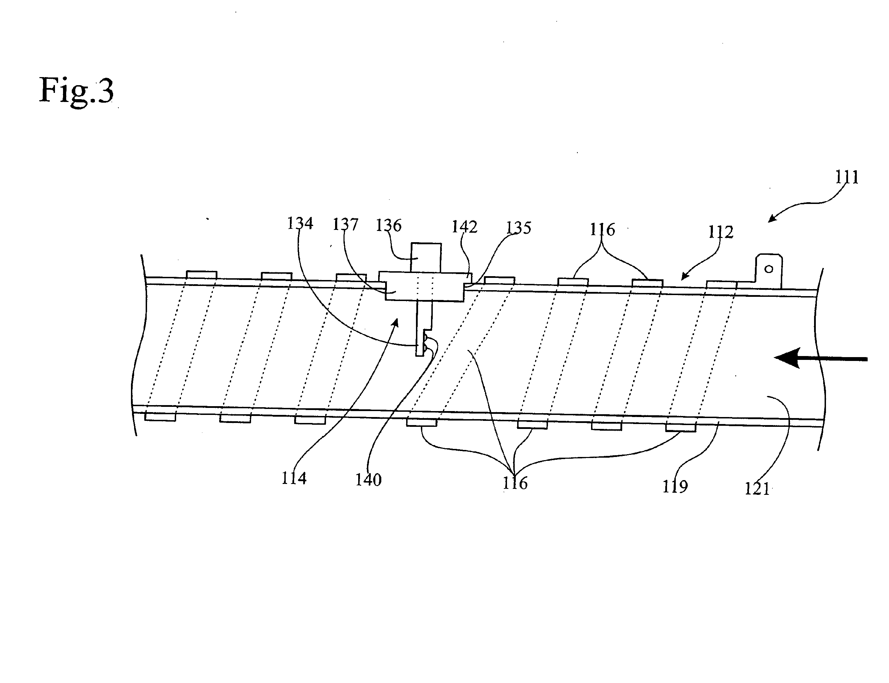

Fig. 3 zeigt einen Schnitt durch ein Heizrohr 111. Es besteht aus einem außen isolierten Metallrohr 119 mit einem Durchflussquerschnitt 121. Auf die Außenisolation ist als Heizeinrichtung 112 ein flacher Heizleiterdraht 116 spiralförmig aufgewickelt und befestigt, beispielsweise verklebt. Hier könnte auch ein mäanderförmig verlaufender Dickschicht-Heizwiderstand aufgebracht sein, insbesondere direkt aufgedruckt.

In dem Metallrohr 119 befindet sich eine Öffnung 135. In diese ist in einem breiteren Zwischenraum zwischen den Windungen des Heizleiterdrahtes 116 eine Leitfähigkeitsmesseinrichtung 114 eingebracht, und zwar dichtend. Diese Dichtwirkung wird durch den Sockel 137 noch verbessert, der außen in einen Flansch 142 übergeht. Dabei sitzt der Sockel passgenau und unter Umständen zusammen mit einer Dichtung in der Öffnung 135. Von dem Sockel 137 steht der Anschluß 136 ab.

Der Schaft 134 mit den Elektroden 140 ragt dabei derart in das Rohr 119, dass sie relativ mittig in dem Rohr liegen. So werden sie besonders gut von Wasser in dem Rohr angeströmt, das beispielsweise von rechts nach links fließt.

Alternativ können die Elektroden derart an einem anders ausgebildeten Schaft angebracht sein, dass sie relativ nahe an der Innenwandung des Metallrohrs 119 liegen. Der Schaft ragt dann nicht oder nur minimal in den Querschnitt des Rohrs 119 und verläuft in etwa parallel dazu. Dann wird der Durchfluß minimal behindert bzw. gebremst, es treten auch weniger Verwirbelungen auf. Die Elektroden können dabei in Durchflussrichtung hintereinander oder nebeneinander liegen.

## Patentansprüche

1. Heizeinrichtung für ein wasserführendes und/oder mit verschmutztem Wasser arbeitendes Elektrogerät mit einer Wasserführung (119), insbesondere eine Waschmaschine oder eine Spülmaschine, wobei die Heizeinrichtung (12, 112) wenigstens ein Heizelement (16, 116) aufweist und das Heizelement (16, 116) an oder in der Wasserführung angeordnet ist, **dadurch gekennzeichnet, dass** die Wandung der Wasserführung (119) im Bereich der Heizeinrichtung eine Öffnung (135) aufweist und eine Leitfähigkeitsmessvorrichtung (14, 114) derart vorgesehen ist, dass dass sie im Bereich der Öffnung oder durch die Öffnung in die Wasserführung hineinragt.

2. Heizeinrichtung nach Anspruch 1, **dadurch gekennzeichnet, dass** das Heizelement (16) mittels einer Halterung (18) in der Öffnung der Wandung der Wasserführung angeordnet ist, wobei die Leitfähigkeitsmessvorrichtung (14) an der Halterung (18) angeordnet ist und in die Wasserführung ragt.

3. Heizeinrichtung nach Anspruch 2, **dadurch gekennzeichnet, dass** an der Halterung (18) eine Ausnehmung (26) für die Aufnahme der Leitfähigkeitsmessvorrichtung (14) vorgesehen ist, wobei vorzugsweise die Halterung (18) in einer Ausnehmung in einer Wandung der Wasserführung abgedichtet angeordnet ist.

4. Heizeinrichtung nach Anspruch 1, **dadurch gekennzeichnet, dass** das Heizelement (116) an der Außenseite der Wandung flächig angeordnet ist, wobei insbesondere die Wasserführung (118) rohrartig ausgebildet ist und das Heizelement (116) ein auf die Wasserführung (119) aufgewickelter Heizleiter oder ein Dickschicht-Heizelement ist.

5. Heizeinrichtung nach Anspruch 4, **dadurch gekennzeichnet, dass** die Leitfähigkeitsmessvorrichtung (114) als einziges Teil in die Wasserführung (119) hineinragt, wobei sie vorzugsweise die Öffnung (135) in der Wandung der Wasserführung (119) vollständig und dichtend ausfüllt bzw. verschließt.

6. Heizeinrichtung nach einem der vorhergehenden Ansprüche, **dadurch gekennzeichnet, dass** die Leitfähigkeitsmessvorrichtung (14, 114) wenigstens einen Anschluss (36, 136), einen Schaft (34) und einen Sensorbereich (32) aufweist, wobei vorzugsweise am Sensorbereich (32) wenigstens zwei Sensoren (40, 140) zur Bestimmung der Leitfähigkeit vorgesehen sind.

7. Heizeinrichtung nach Anspruch 6, **dadurch gekennzeichnet, dass** die Sensoren (40, 140) als Elektroden ausgebildet sind zur Bestimmung des elektrischen Widerstandes bzw. der Leitfähigkeit des Wassers, vorzugsweise direkt als Messgröße.

8. Heizeinrichtung nach Anspruch 6, **dadurch gekennzeichnet, dass** die Sensoren (40, 140) als Kondensatorplatten ausgebildet sind zur Bestimmung der Permittivität des Wassers.

9. Heizeinrichtung nach Anspruch 6, **dadurch gekennzeichnet, dass** die Sensoren (40, 140) als Spulen ausgebildet sind zur Bestimmung der Permeabilität des Wassers.

10. Heizeinrichtung nach einem der Ansprüche 7 bis 9, **dadurch gekennzeichnet, dass** die Sensoren (40, 140) korrosionsbeständig ausgebildet sind, vorzugsweise zumindest mit einem korrosionsbeständigen Material überzogen sind, wobei sie insbesondere aus Silizium bestehen und mit Tantalpentoxid überzogen sind.

11. Heizeinrichtung nach einem der vorstehenden Ansprüche, **dadurch gekennzeichnet, dass** die Heizeinrichtung (12, 112) bzw. das Heizelement (16, 116) langgestreckt ist, wobei sie vorzugsweise einen Zwischenraum (20) oder freien Raum aufweist, in dem der Sensorbereich (32) angeordnet ist.

12. Heizeinrichtung nach einem der vorstehenden Ansprüche, **dadurch gekennzeichnet, dass** die Leitfähigkeitsmessvorrichtung (14, 114) einstückig gefertigt ist, wobei insbesondere.

13. Heizeinrichtung nach einem der vorstehenden Ansprüche, **dadurch gekennzeichnet, dass** Heizeinrichtung und Leitfähigkeitsmessvorrichtung (14, 114) eine Baueinheit bilden, vorzugsweise eine vormontierbare und zerlegbare Baueinheit.

14. Heizeinrichtung nach Anspruch 13, **gekennzeichnet durch** eine Ausnehmung (26) in der Halterung (18), die mit der Leitfähigkeitsmessvorrichtung (14) bzw. mit dem Schaft (34) korrespondiert, wobei vorzugsweise die Leitfähigkeitsmessvorrichtung (14) in der Halterung (18) wasserdicht angeordnet ist.

15. Heizeinrichtung nach Anspruch 14, **gekennzeichnet durch** eine formschlüssige, verdrehsichere Verbindung zwischen Leitfähigkeitsmessvorrichtung (14) und Halterung (18), wobei vorzugsweise die Verdrehsicherung derart gestaltet ist, dass die Sensoren (40) der Leitfähigkeitsmessvorrichtung (14) im montierten Zustand der Vorrichtung (14) vertikal ausgerichtet sind.

16. Heizeinrichtung nach einem der vorhergehenden Ansprüche, **dadurch gekennzeichnet, dass** eine Auswertevorrichtung vorgesehen ist zur Auswertung der Sensorsignale der Leitfähigkeitsmessvorrichtung (14, 114), wobei vorzugsweise die Auswertevorrichtung zur Berichtigung eines ermittelten Leitfähigkeitswerts, der durch die direkte Nachbarschaft zum Heizelement (16, 116) durch die lokal höhere Wassertemperatur verfälscht ist, mittels eines Korrekturfaktors ausgebildet ist.
